# EUROPEAN PATENT APPLICATION

(11) **EP 3 715 222 A1**
(43) Date of publication of application: **30.09.2020**
(21) Application number: 20165866.3
(22) Date of filing: 26.03.2020
(51) Int. Cl.: B62D 15/02, F16H 57/04, G01B 7/30, B62D 5/04

(54) **SENSOR DEVICE**

(30) Priority: 29.03.2019 JP 2019067942
(71) Applicant: JTEKT CORPORATION, Chuo-ku, Osaka-shi, Osaka 542-8502 (JP)
(72) Inventor: TOYAMA, Yuichi, Osaka-shi,, Osaka 542-8502 (JP)
(74) Representative: Winter, Brandl, Fürniss, Hübner, Röss, Kaiser, Polte - Partnerschaft mbB

(57) **Abstract**

A sensor device includes: a main driving gear (52); a driven gear (53, 54) meshed with the main driving gear; a support member (55) that rotatably supports the driven gear; and a substrate (61) on which a rotational angle sensor (62, 63) is mounted. A lubricant is applied to teeth of the driven gear. The driven gear, the support member, and the substrate are stacked in this order from an upper side toward a lower side in a direction of gravitational force with the sensor device attached to an attachment target. A part or all of a surface of the support member on a side of the driven gear is inclined with respect to a direction that is orthogonal to the rotary shaft so as to lead the lubricant to an end portion of the support member on an outer side with respect to the substrate.

## Description

### BACKGROUND OF THE INVENTION

### 1. Field of the Invention

The present invention relates to a sensor device.

### 2. Description of Related Art

A variety of systems for improving travel stability, such as vehicle stability control systems and electronic control suspensions, are occasionally mounted on vehicles along with enhancement in the functionality of the vehicles. Such systems acquire the steering angle of a steering wheel as a piece of attitude information on the vehicle, and perform control on the basis of the attitude information such that the attitude of the vehicle is stabilized. Therefore, a rotational angle sensor device that detects the steering angle of the steering wheel is provided inside a steering column of the vehicle, for example.

Japanese Unexamined Patent Application Publication (Translation of PCT Application) No. 11-500828 (JP 11-500828 A) describes a rotational angle sensor device that includes a main driving gear provided so as to be rotatable together with a steering shaft and two driven gears meshed with the main driving gear. The respective numbers of teeth of the two driven gears are different from each other. The rotational angle sensor device detects the respective rotational angles of the two driven gears using respective rotational angle sensors provided in correspondence with the two driven gears, and calculates the rotational angle of the steering shaft on the basis of such detected rotational angles.

### SUMMARY OF THE INVENTION

Lubricant is occasionally applied to the teeth of the driven gears in order to reduce vibration and noise, and the lubricant occasionally drips from the teeth of the driven gears when the viscosity of the lubricant is lowered because of degradation over time etc. No measures are taken against the lubricant which has dripped, and it is not determined how the lubricant which has dripped flows in accordance with the situation. In the arrangement configuration of the sensor device, a substrate on which the rotational angle sensors are mounted is occasionally disposed under the driven gears in the direction of gravitational force, and it is conceivable that the lubricant which has dripped reaches the substrate. If the lubricant which has dripped reaches the substrate, the substrate may be degraded because of the lubricant.

An aspect of the present invention provides a sensor device that detects a rotational angle of a rotary shaft as a detection target. The sensor device includes: a main driving gear provided so as to be rotatable together with the rotary shaft; a driven gear meshed with the main driving gear; a support member that rotatably supports the driven gear; and a substrate on which a rotational angle sensor that is configured to generate an electric signal based on rotation of the driven gear is mounted. A lubricant is applied to teeth of the driven gear. The driven gear, the support member, and the substrate are stacked in this order from an upper side toward a lower side in a direction of gravitational force with the sensor device attached to an attachment target. A part or all of a surface of the support member on a driven gear side is inclined with respect to a direction that is orthogonal to the rotary shaft so as to lead the lubricant to an end portion of the support member on an outer side with respect to the substrate.

With the configuration described above, the surface of the support member on the driven gear side is occasionally inclined because of misalignment caused during the attachment of the sensor device, temporal variations after the attachment of the sensor device, etc., and the surface is occasionally inclined so as to lead the lubricant toward the end portion on the outer side with respect to the substrate with the sensor device attached to the attachment target. In this case, the lubricant which has dripped from the teeth of the driven gear onto the surface of the support member on the driven gear side flows from the upper side toward the lower side in the direction of gravitational force in accordance with the inclination to be led toward an end portion of the support member. The end portion of the support member to which the lubricant is led is positioned on the outer side with respect to the substrate. Thus, the lubricant which has dripped can be prevented from reaching the substrate, and degradation of the substrate due to the lubricant can be suppressed.

In the sensor device described above, the surface of the support member on the driven gear side may have a recessed groove. The recessed groove may be provided so as to lead the lubricant to the end portion of the support member on the outer side with respect to the substrate.

With the configuration described above, when the lubricant which has dripped onto the surface of the support member on the driven gear side flows into the recessed groove which is provided in the support member, the lubricant is moved in the recessed groove along the shape of the recessed groove to be adequately led toward the end portion on the outer side with respect to the substrate. In addition, the lubricant is led toward the end portion on the outer side with respect to the substrate along the recessed groove, and thus the lubricant can be prevented from flowing to reach the end portion, on the outer side with respect to which the substrate is positioned, even if the substrate is positioned on the outer side with respect to an end portion of the support member.

In the sensor device described above, the surface of the support member on the driven gear side may be an inclined surface inclined toward the end portion of the support member on the outer side with respect to the substrate. A distance between the inclined surface and the substrate may become shorter toward the end portion of the support member on the outer side with respect to the substrate.

With the configuration described above, the lubricant which has dripped onto the inclined surface which is formed on the support member is moved along the inclination in accordance with the gravitational force, and thus is adequately led toward the end portion on the outer side with respect to the substrate. The sensor device described above may further include a torque sensor that detects torque that acts on the rotary shaft.

With the configuration described above, it is possible to detect not only the rotational angle of the rotary shaft but also torque that acts on the rotary shaft.

With the sensor device according to the present invention, the lubricant which has dripped from the teeth of the driven gear can be prevented from reaching the substrate.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram of a steering device that includes a sensor device according to a first embodiment;
FIG. 2 is a sectional view of the sensor device according to the first embodiment taken along a plane including the axis of a first pinion shaft and including a line at an intermediate position between the axis of a first driven gear and the axis of a second driven gear;
FIG. 3 is a schematic perspective view of a torque sensor device of the sensor device according to the first embodiment;
FIG. 4 is a sectional view of the sensor device according to the first embodiment taken along a plane including a line that is orthogonal to the axis of the first pinion shaft and between a support member and a cover plate and seen from the upper side of the drawing sheet surface of FIG. 2;
FIG. 5 is a sectional view of the sensor device according to the first embodiment taken along a plane including a line that is orthogonal to the axis of the first pinion shaft and between the support member and a substrate and seen from the lower side of the drawing sheet surface of FIG. 2;
FIG. 6 is a schematic side view of a sensor device according to a second embodiment, in which a first driven gear, a second driven gear, a support member, and a substrate are seen from a direction that is orthogonal to the axial direction of a first pinion shaft;
FIG. 7 is a schematic side view of a sensor device according to a different embodiment, in which a first driven gear, a second driven gear, a support member, and a substrate are seen from a direction that is orthogonal to the axial direction of a first pinion shaft; and
FIG. 8 is a sectional view of a sensor device according to a different embodiment taken along a plane including the axis of a first pinion shaft and including a line at an intermediate position between the axis of a first driven gear and the axis of a second driven gear.

### DETAILED DESCRIPTION OF EMBODIMENTS

### First Embodiment

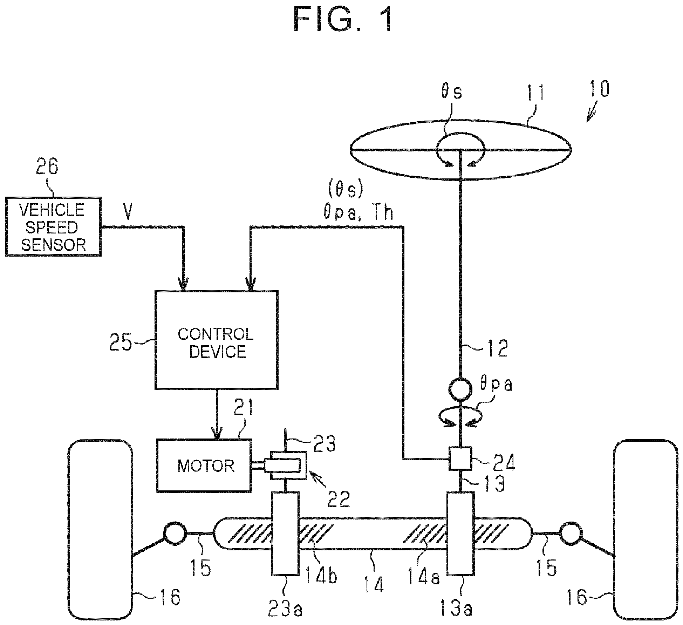

A sensor device according to a first embodiment will be described with reference to the drawings. As illustrated in FIG. 1, a steering device 10 of a vehicle has a steering shaft 12 coupled to a steering wheel 11, a first pinion shaft 13, a steered shaft 14, a motor 21, a speed reduction mechanism 22, a second pinion shaft 23, a sensor device 24, and a control device 25. The first pinion shaft 13 is provided at an end portion of the steering shaft 12, on the opposite side of the steering shaft 12 from the steering wheel 11. Pinion teeth 13a of the first pinion shaft 13 are meshed with rack teeth 14a of the steered shaft 14 which extends in a direction crossing the first pinion shaft 13. Right and left steered wheels 16 are coupled to both ends of the steered shaft 14 via respective tie rods 15.

The motor 21 is a generation source of a steering assist force, and may be a three-phase brushless motor, for example. The motor 21 is coupled to the second pinion shaft 23 via the speed reduction mechanism 22. Pinion teeth 23a of the second pinion shaft 23 are meshed with rack teeth 14b of the steered shaft 14. Rotation of the motor 21 is reduced in speed by the speed reduction mechanism 22. A rotational force at the reduced speed is transferred from the second pinion shaft 23 to the first pinion shaft 13 via the steered shaft 14 as the steering assist force.

The sensor device 24 detects operation of the first pinion shaft 13 as a rotary shaft. The sensor device 24 is a torque/angle sensor device that includes a combination of a torque sensor device that detects torque applied to the first pinion shaft 13 through a steering operation of the steering wheel 11 as steering torque Th and a rotational angle sensor device that detects a rotational angle θpa of the first pinion shaft 13 which may exceed 360 degrees as a steering angle θs.

The control device 25 retrieves the steering torque Th and the steering angle θs which are detected through the sensor device 24. The control device 25 retrieves a vehicle speed V detected through a vehicle speed sensor 26 provided in the vehicle. The control device 25 executes control for generating a steering assist force that matches the steering torque Th and the vehicle speed V through energization control performed on the motor 21. The control device 25 controls power supply to the motor 21 on the basis of the steering torque Th which is detected through the sensor device 24 and the vehicle speed V which is detected through the vehicle speed sensor 26. Consequently, the control device 25 assists a driver in performing a steering operation by providing the rotational force of the motor 21 to the first pinion shaft 13 as a steering assist force on the basis of an operation of the steering wheel 11 by the driver.

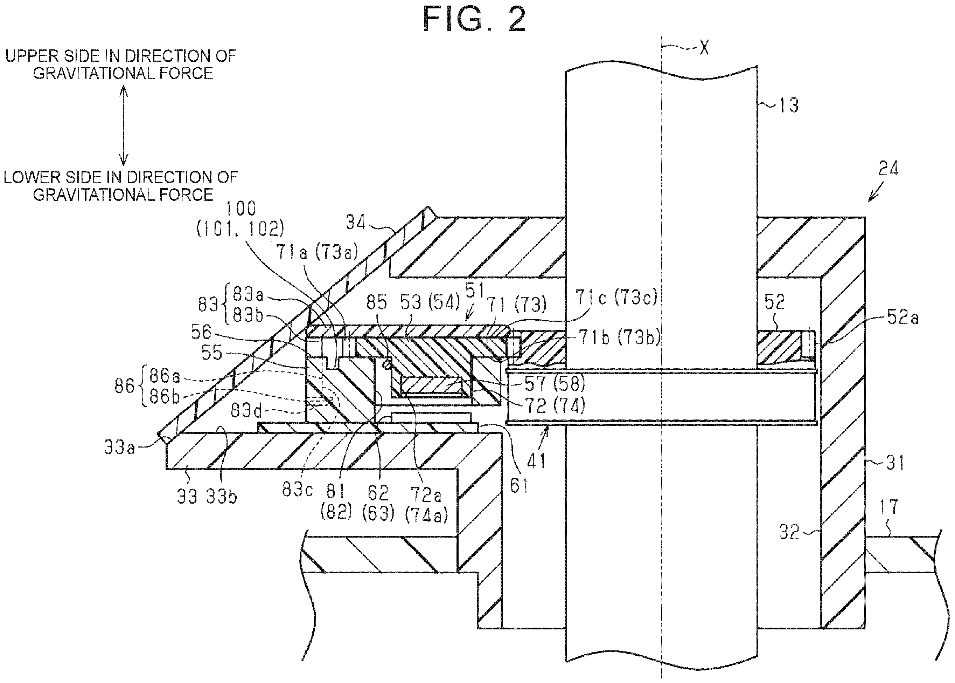

The configuration of the sensor device 24 will be described. As illustrated in FIGS. 1 and 2, the sensor device 24 has a sensor housing 31. The sensor housing 31 is attached to a gear housing 17 that houses the steered shaft 14 and the first pinion shaft 13. The sensor housing 31 has an insertion portion 32 and a housing portion 33 that communicate with each other. The insertion portion 32 is formed in a tubular shape with its axis extending in an axial direction X of the first pinion shaft 13. The first pinion shaft 13 is inserted through the insertion portion 32. The first pinion shaft 13 has an input shaft on the side of the steering shaft 12, an output shaft on the side of the steered shaft 14, and a torsion bar that couples the input shaft and the output shaft to each other. The housing portion 33 is formed in a box shape, and projects from a side surface of the insertion portion 32 in a direction crossing the axial direction X. The housing portion 33 opens in a direction crossing the axial direction X. An opening portion 33a of the housing portion 33 is closed by a cover 34. When the sensor device 24 is attached to the gear housing 17, the side of the steering shaft 12 corresponds to the upper side in the direction of gravitational force, and the side of the steered shaft 14 corresponds the lower side in the direction of gravitational force.

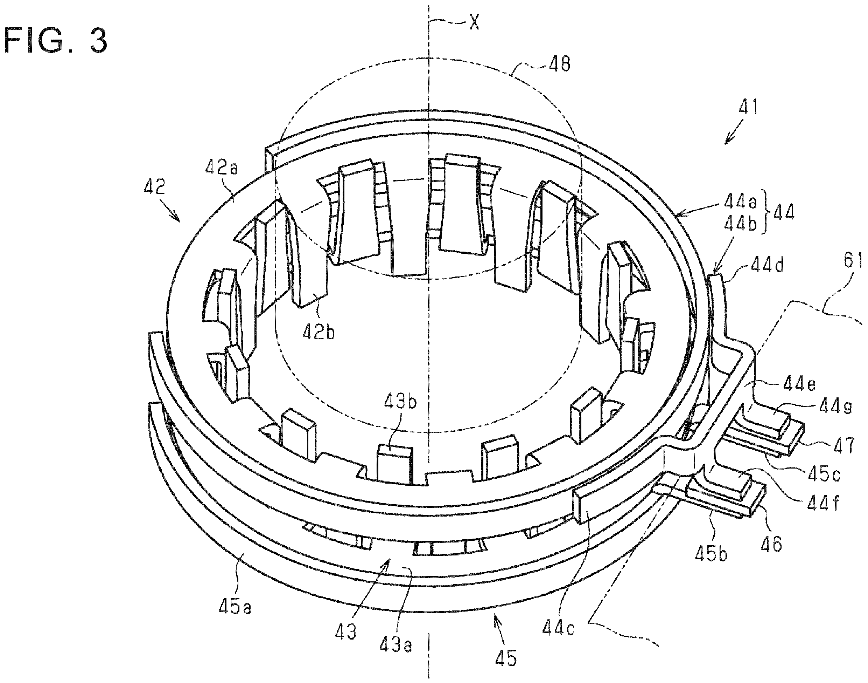

A torque sensor device 41 and a rotational angle sensor device 51 are provided inside the sensor housing 31. As illustrated in FIG. 3, the torque sensor device 41 has a first magnetic yoke 42, a second magnetic yoke 43, a first magnetism collection ring 44, a second magnetism collection ring 45, a first torque sensor 46, a second torque sensor 47, and a multi-pole magnet 48.

The multi-pole magnet 48 is fixed to the input shaft of the first pinion shaft 13. The multi-pole magnet 48 is formed in a tubular shape with S poles and N poles provided alternately along the circumferential direction thereof. The first magnetic yoke 42 and the second magnetic yoke 43 are fixed to the output shaft of the first pinion shaft 13. The multi-pole magnet 48, which is provided so as to be rotatable together with the first pinion shaft 13, is positioned inside the first magnetic yoke 42 and the second magnetic yoke 43. The first magnetic yoke 42 and the second magnetic yoke 43 form a magnetic circuit corresponding to the magnetic field of the multi-pole magnet 48.

The first magnetic yoke 42 has an annular portion 42a in a circular ring plate shape and a plurality of teeth 42b in a plate shape. The plurality of teeth 42b are provided at equal intervals along the inner peripheral edge of the annular portion 42a. The plurality of teeth 42b extend along the axial direction X of the first pinion shaft 13. Similarly to the first magnetic yoke 42, the second magnetic yoke 43 has an annular portion 43a in a circular ring plate shape and a plurality of teeth 43b. The teeth 42b of the first magnetic yoke 42 and the teeth 43b of the second magnetic yoke 43 extend in opposite directions in the axial direction X of the first pinion shaft 13, and are positioned alternately in the circumferential direction.

The first magnetism collection ring 44 and the second magnetism collection ring 45 are provided side by side in the axial direction X of the first pinion shaft 13. The first magnetism collection ring 44 and the second magnetism collection ring 45 are attached to the inside of the sensor housing 31. The first magnetism collection ring 44 is provided to surround the periphery of the first magnetic yoke 42. The second magnetism collection ring 45 is provided to surround the periphery of the second magnetic yoke 43. The first magnetism collection ring 44 induces magnetic flux from the first magnetic yoke 42. The second magnetism collection ring 45 induces magnetic flux from the second magnetic yoke 43.

The first magnetism collection ring 44 has a first ring portion 44a and a first magnetism collection portion 44b. The first ring portion 44a is provided in a C-shape curved along the outer peripheral surface of the first magnetic yoke 42. The first magnetism collection portion 44b has two fixed portions 44c and 44d, a coupling portion 44e, and two first magnetism collection projecting portions 44f and 44g. The two fixed portions 44c and 44d are attached to the outer peripheral surface of the first ring portion 44a. The two fixed portions 44c and 44d are curved along the outer peripheral surface of the first ring portion 44a. The coupling portion 44e couples the two fixed portions 44c and 44d to each other. A gap is provided between the inner surface of the coupling portion 44e and the outer peripheral surface of the first ring portion 44a. The two first magnetism collection projecting portions 44f and 44g are provided at an end portion of the coupling portion 44e on the side of the second magnetism collection ring 45. The two first magnetism collection projecting portions 44f and 44g extend toward the radially outer side of the first ring portion 44a.

The second magnetism collection ring 45 has a second ring portion 45a and two second magnetism collection projecting portions 45b and 45c. The second ring portion 45a is provided in a C-shape curved along the outer peripheral surface of the second magnetic yoke 43. The two second magnetism collection projecting portions 45b and 45c extend toward the radially outer side of the second ring portion 45a. The two second magnetism collection projecting portions 45b and 45c face the two first magnetism collection projecting portions 44f and 44g, respectively, of the first magnetism collection ring 44 in the axial direction X of the first pinion shaft 13.

The first torque sensor 46 and the second torque sensor 47 are provided on a substrate 61. The first torque sensor 46 is interposed between the first magnetism collection projecting portion 44f and the second magnetism collection projecting portion 45b. The second torque sensor 47 is interposed between the first magnetism collection projecting portion 44g and the second magnetism collection projecting portion 45c. The first torque sensor 46 and the second torque sensor 47 are magnetism sensors that detect magnetic flux induced by the first magnetism collection ring 44 and the second magnetism collection ring 45, respectively. The first torque sensor 46 and the second torque sensor 47 may be Hall sensors, for example.

When the torsion bar of the first pinion shaft 13 is deformed to be twisted through an operation of the steering wheel 11, the relative position of the multi-pole magnet 48 and the first magnetic yoke 42 in the rotational direction and the relative position of the multi-pole magnet 48 and the second magnetic yoke 43 in the rotational direction are varied. Accordingly, the density of magnetic flux induced from the multi-pole magnet 48 to the first magnetism collection ring 44 through the first magnetic yoke 42 is varied. In addition, the density of magnetic flux induced from the multi-pole magnet 48 to the second magnetism collection ring 45 through the second magnetic yoke 43 is also varied. The first torque sensor 46 and the second torque sensor 47 generate an electric signal that matches the magnetic flux density. The control device 25 illustrated in FIG. 1 computes torque that acts on the torsion bar as the steering torque Th on the basis of the electric signals which are generated by the first torque sensor 46 and the second torque sensor 47.

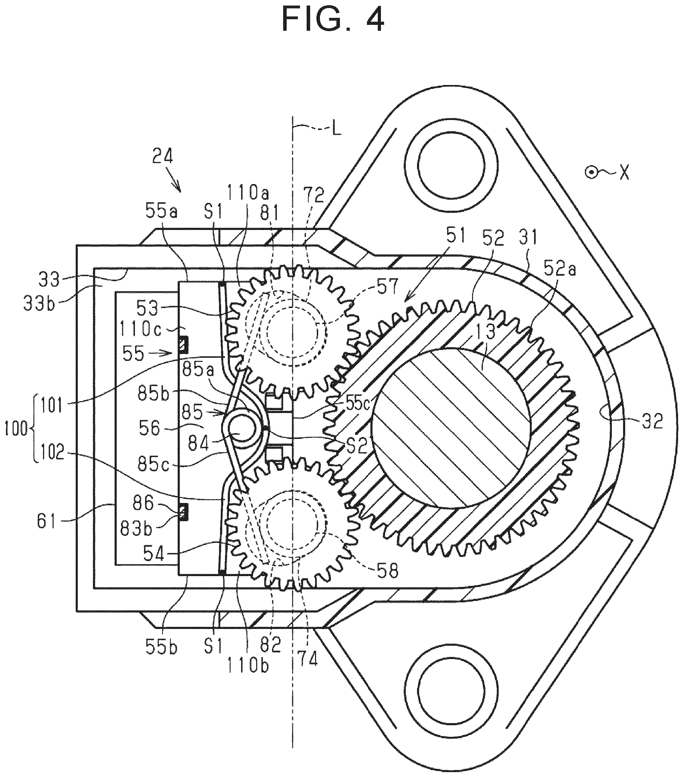

As illustrated in FIGS. 2 and 4, the rotational angle sensor device 51 has a main driving gear 52, a first driven gear 53, a second driven gear 54, a support member 55, the substrate 61, a stopper 83, a torsion coil spring 85, a first rotational angle sensor 62, and a second rotational angle sensor 63. The main driving gear 52 is provided so as to be rotatable together with the input shaft of the first pinion shaft 13. The main driving gear 52 is formed in a cylindrical shape with a plurality of teeth 52a formed on the outer peripheral surface thereof and with the input shaft of the first pinion shaft 13 fitted with the inner peripheral surface thereof. The first driven gear 53 and the second driven gear 54 are meshed with the main driving gear 52. A lubricant such as grease is applied to the teeth 52a of the main driving gear 52 in order to reduce vibration transmitted from the first driven gear 53 and the second driven gear 54 and noise generated between the first driven gear 53 and the second driven gear 54. The substrate 61 is attached to an inner bottom surface 33b of the housing portion 33 of the sensor housing 31. Ideally, the sensor device 24 is assembled to the gear housing 17 such that the inner bottom surface 33b extends horizontally, and the substrate 61 and the support member 55 are also attached to the inner bottom surface 33b so as to extend horizontally.

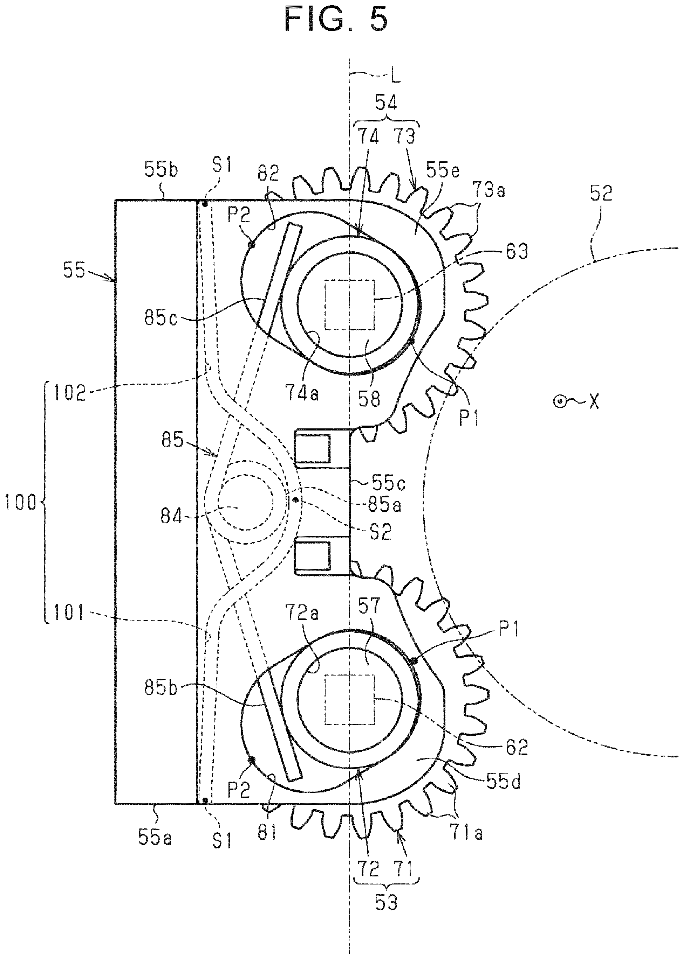

As illustrated in FIGS. 4 and 5, the support member 55 rotatably supports the first driven gear 53 and the second driven gear 54. The support member 55 is attached to the inner bottom surface 33b of the housing portion 33 of the sensor housing 31. The support member 55 is formed in a rectangular plate shape. A long side surface 55c of the support member 55 faces the main driving gear 52. A line that connects between the axis of the first driven gear 53 and the axis of the second driven gear 54 is defined as an imaginary line L. The direction along the imaginary line L coincides with the longitudinal direction of the support member 55. The support member 55 is formed with a first support hole 81 and a second support hole 82. The first support hole 81 and the second support hole 82 are holes that penetrate the support member 55 in the axial direction X of the first pinion shaft 13. The first support hole 81 and the second support hole 82 are arranged side by side in the direction along the imaginary line L. The first support hole 81 is provided in the vicinity of a first corner portion 55d at which a first short side surface 55a of the support member 55 and the long side surface 55c on the side of the main driving gear 52 cross each other. The second support hole 82 is provided in the vicinity of a second corner portion 55e at which a second short side surface 55b of the support member 55 and the long side surface 55c on the side of the main driving gear 52 cross each other. The first support hole 81 and the second support hole 82 are formed in the shape of a long hole that extends along the radial direction of the main driving gear 52 as seen in the axial direction X of the first pinion shaft 13. The separation distance between the first support hole 81 and the second support hole 82 is shortest on the side of the main driving gear 52, and is longer at a location farther away from the main driving gear 52.

As illustrated in FIGS. 2 and 5, the first driven gear 53 has a first gear portion 71 in a circular plate shape and a first shaft portion 72 in a circular column shape. A plurality of teeth 71a are provided on the outer peripheral surface of the first gear portion 71. The teeth 71a of the first gear portion 71 are meshed with the teeth 52a of the main driving gear 52. A lubricant such as grease is applied to the teeth 71a of the first gear portion 71 in order to reduce vibration transmitted from the main driving gear 52 and noise between the main driving gear 52 and the teeth 71a. One end surface of the first shaft portion 72 is connected to the middle of a first side surface 71b of the first gear portion 71 on the side of the substrate 61. The axis of the first gear portion 71 and the axis of the first shaft portion 72 coincide with each other. The outside diameter of the first shaft portion 72 is set to be smaller than the outside diameter of the first gear portion 71. The other end surface of the first shaft portion 72 on the side of the substrate 61 is provided with a recessed portion 72a. The recessed portion 72a is formed to have a circular cross-sectional shape in a direction that is orthogonal to the axial direction of the first shaft portion 72. A first permanent magnet 57 is disposed in the recessed portion 72a. The first permanent magnet 57 is magnetized such that magnetic poles with different polarities are arranged side by side alternately in the circumferential direction. The first permanent magnet 57 is rotated together with the first driven gear 53. The second driven gear 54 has a second gear portion 73 in a circular plate shape and a second shaft portion 74 in a circular column shape. The other end surface of the second shaft portion 74 on the side of the substrate 61 is provided with a recessed portion 74a. The recessed portion 74a is formed to have a circular cross-sectional shape in a direction that is orthogonal to the axial direction of the second shaft portion 74. A second permanent magnet 58 is disposed in the recessed portion 74a. A lubricant such as grease is applied to the teeth 73a of the first gear portion 73 in order to reduce vibration transmitted from the main driving gear 52 and noise between the main driving gear 52 and the teeth 73a. The first driven gear 53 and the second driven gear 54 are formed in the same shape excluding the fact that the number of teeth 73a of the second gear portion 73 of the second driven gear 54 and the number of the teeth 71a of the first gear portion 71 of the first driven gear 53 are different from each other.

The first shaft portion 72 is housed in the first support hole 81 which is formed in the support member 55. The first shaft portion 72 is rotatable in the first support hole 81. A side surface of the first driven gear 53, that is, the first side surface 71b of the first gear portion 71 on the side of the substrate 61, faces a facing surface 56 of the support member 55. When the first shaft portion 72 is housed in the first support hole 81, the axial direction of the first shaft portion 72 coincides with the axial direction X. The first shaft portion 72 is movable between a first position P1 and a second position P2 along the inner peripheral surface of the first support hole 81. The first position P1 is a position at which the first shaft portion 72 abuts against a portion of the inner peripheral surface of the first support hole 81 on the side closer to the main driving gear 52. The second position P2 is a position at which the first shaft portion 72 abuts against a portion of the inner peripheral surface of the first support hole 81 on the side farther from the main driving gear 52.

The second shaft portion 74 is housed in the second support hole 82 which is formed in the support member 55. The second shaft portion 74 is rotatable in the second support hole 82. A side surface of the second driven gear 54, that is, the first side surface 73b of the second gear portion 73 on the side of the substrate 61, faces the facing surface 56 of the support member 55. The positional relationship between the second shaft portion 74 and the second support hole 82 is the same as the positional relationship between the first shaft portion 72 and the first support hole 81.

As illustrated in FIGS. 2, 4, and 5, a recessed groove 100 is formed in the facing surface 56 of the support member 55. The recessed groove 100 is a leading portion that leads a lubricant that has dripped onto the support member 55 toward an end portion of the support member 55. The end portion of the support member 55 refers to an outer edge of the support member 55 in a direction that is orthogonal to the axial direction X. The recessed groove 100 is formed at a position farther away from the first pinion shaft 13 than the first driven gear 53 and the second driven gear 54 in a direction that is orthogonal to the imaginary line L. The recessed groove 100 is composed of a first recessed groove 101 formed on the side of the first driven gear 53 and a second recessed groove 102 formed on the side of the second driven gear 54. The first recessed groove 101 has a first portion S1 positioned at a first end portion 110a of the facing surface 56 of the support member 55 on the side of the first short side surface 55a as seen in the axial direction X. The first recessed groove 101 has a second portion S2 positioned between the first driven gear 53 and the second driven gear 54 on the facing surface 56 of the support member 55 as seen in the axial direction X. The first recessed groove 101 is formed so as to connect between the first portion S1 and the second portion S2, and formed at a position on the radially outer side of the first driven gear 53 in proximity to the first driven gear 53 as seen in the axial direction X. The first recessed groove 101 intersects a first arm portion 85b as seen in the axial direction X. In addition, the first recessed groove 101 is farther away from the first pinion shaft 13 in a direction that is orthogonal to the imaginary line L as the first recessed groove 101 extends toward the first portion S1. Meanwhile, the second recessed groove 102 has a first portion S1 positioned at a second end portion 110b of the facing surface 56 of the support member 55 on the side of the second short side surface 55b as seen in the axial direction X. The second recessed groove 102 has a second portion S2 positioned between the first driven gear 53 and the second driven gear 54 on the facing surface 56 of the support member 55 as seen in the axial direction X. The second recessed groove 102 is formed so as to connect between the first portion S1 and the second portion S2, and formed at a position on the radially outer side of the second driven gear 54 in proximity to the second driven gear 54 as seen in the axial direction X. The second recessed groove 102 intersects a second arm portion 85c as seen in the axial direction X. In addition, the second recessed groove 102 is farther away from the first pinion shaft 13 in a direction that is orthogonal to the imaginary line L as the second recessed groove 102 extends toward the first portion S1. The second portion S2 of the first recessed groove 101 and the second portion S2 of the second recessed groove 102 are connected to each other. The first end portion 110a and the second end portion 110b are positioned on the outer side with respect to the substrate 61 in the direction of the imaginary line L as seen in the axial direction X. The first end portion 110a and the second end portion 110b are end portions on the outer side with respect to the substrate 61, and exclude a portion obtained by orthogonally projecting the substrate 61 onto the support member 55 as seen in the axial direction X. A third end portion 110c of the facing surface 56 of the support member 55 on the side of a long side surface on the opposite side of the facing surface 56 from the long side surface 55c is positioned on the inner side with respect to the substrate 61 in a direction that is orthogonal to the imaginary line L. The third end portion 110c is an end portion on the inner side with respect to the substrate 61, and overlaps a portion obtained by orthogonally projecting the substrate 61 onto the support member 55 as seen in the axial direction X. The first driven gear 53 and the second driven gear 54, the support member 55, and the substrate 61 are stacked in this order from the upper side in the direction of gravitational force toward the lower side in the direction of gravitational force with the sensor device 24 attached to the gear housing 17.

As illustrated in FIG. 2, the stopper 83 in a plate shape is mounted on the support member 55. The stopper 83 covers the facing surface 56 of the support member 55. The stopper 83 has a cover plate 83a in a rectangular plate shape and engagement pieces 83b provided on the cover plate 83a to be engaged with the support member 55. The cover plate 83a faces a side surface of the first driven gear 53, that is, a second side surface 71c on the opposite side of the first gear portion 71 from the first side surface 71b. The cover plate 83a faces a side surface of the second driven gear 54, that is, a second side surface 73c on the opposite side of the second gear portion 73 from the first side surface 73b. The engagement pieces 83b extend toward the support member 55 from an end portion of a long side, of the long sides of the cover plate 83a, on the opposite side of the cover plate 83a from a long side on the side of the main driving gear 52. Two engagement pieces 83b are provided. The engagement pieces 83b each have an extension portion 83c that extends in the axial direction X from the cover plate 83a and an engagement projecting portion 83d that projects in a direction intersecting the axial direction X from the distal end portion of the extension portion 83c. Two engagement portions 86 to be engaged with the engagement pieces 83b are formed in a long side surface of the support member 55 on the opposite side of the support member 55 from the long side surface 55c. The engagement portions 86 each have a recessed streak portion 86a that extends in the axial direction X from the facing surface 56 of the support member 55 and an engagement recessed portion 86b recessed in a direction intersecting the axial direction X at an end portion of the recessed streak portion 86a on the opposite side of the recessed streak portion 86a from the facing surface 56. The stopper 83 is attached to the support member 55 with the extension portion 83c fitted with the recessed streak portion 86a and with the engagement projecting portion 83d fitted with the engagement recessed portion 86b. The recessed groove 100 is located away from the engagement pieces 83b of the stopper 83 with the engagement pieces 83b engaged with the engagement portions 86 of the support member 55. Movement of the first driven gear 53 and the second driven gear 54 toward the opposite side of the substrate 61 is regulated by the first gear portion 71 and the second gear portion 73 abutting against the cover plate 83a of the stopper 83.

As illustrated in FIG. 4, a column portion 84 in a circular column shape is provided on the facing surface 56 of the support member 55. The column portion 84 is provided at a position between the first support hole 81 and the second support hole 82 in the longitudinal direction of the support member 55, and at a position farther away from the main driving gear 52 than the first support hole 81 and the second support hole 82 in the short-length direction of the support member 55. The torsion coil spring 85 made of metal is mounted on the column portion 84 to be supported by the support member 55.

As illustrated in FIG. 5, the torsion coil spring 85 is formed in a generally V-shape as a whole. The torsion coil spring 85 is provided with a coil portion 85a provided at the middle portion thereof and wound a plurality of times and the first arm portion 85b and the second arm portion 85c provided at both end portions thereof and extending straight. The coil portion 85a in a circular ring shape is fitted with the column portion 84. The first arm portion 85b is connected to one end portion of the coil portion 85a. The second arm portion 85c is connected to the other end portion of the coil portion 85a. The first arm portion 85b abuts against a portion of the first shaft portion 72 on the opposite side of the first shaft portion 72 from the main driving gear 52. The second arm portion 85c abuts against a portion of the second shaft portion 74 on the opposite side of the second shaft portion 74 from the main driving gear 52. The first arm portion 85b and the second arm portion 85c are elastically deformable so as to reduce the angle between the first arm portion 85b and the second arm portion 85c around the coil portion 85a. The first shaft portion 72 and the second shaft portion 74 are always biased by the elastic force of the torsion coil spring 85 in the direction of moving closer toward the main driving gear 52. Movement of the first driven gear 53 closer toward the main driving gear 52 is regulated by the main driving gear 52 and the first driven gear 53 being suitably meshed with each other. Movement of the second driven gear 54 closer toward the main driving gear 52 is regulated by the main driving gear 52 and the second driven gear 54 being suitably meshed with each other.

As illustrated in FIG. 2, the first rotational angle sensor 62 and the second rotational angle sensor 63 are mounted on a surface of the substrate 61 on the side of the first driven gear 53 and the second driven gear 54. The first rotational angle sensor 62 faces the first permanent magnet 57 in the axial direction X. The second rotational angle sensor 63 faces the second permanent magnet 58 in the axial direction X. The first rotational angle sensor 62 and the second rotational angle sensor 63 may be Hall sensors, for example.

When the first pinion shaft 13 is rotated through an operation of the steering wheel 11, the first driven gear 53 and the second driven gear 54 are rotated through meshing with the main driving gear 52. Accordingly, the density of magnetic flux input from the first permanent magnet 57 of the first driven gear 53 to the first rotational angle sensor 62 is varied, and the density of magnetic flux input from the second permanent magnet 58 of the second driven gear 54 to the second rotational angle sensor 63 is varied. The first rotational angle sensor 62 and the second rotational angle sensor 63 generate an electric signal that matches the magnetic flux density. The control device 25 illustrated in FIG. 1 computes the rotational angle of the first driven gear 53 on the basis of the electric signal which is generated by the first rotational angle sensor 62, and computes the rotational angle of the second driven gear 54 on the basis of the electric signal which is generated by the second rotational angle sensor 63. The control device 25 computes the rotational angle θpa of the first pinion shaft 13 as the steering angle θs on the basis of the thus computed rotational angles.

The functions and the effects of the first embodiment will be described.
(1) A lubricant is applied to the teeth 71a of the first gear portion 71 of the first driven gear 53 and the teeth 73a of the second gear portion 73 of the second driven gear 54. The lubricant occasionally drips onto the facing surface 56 of the support member 55 because of the gravitational force when the viscosity of the lubricant is lowered because of degradation over time etc. In this respect, the sensor device 24 is occasionally misaligned with respect to the gear housing 17 during assembly, the support member 55 is occasionally misaligned with respect to the inner bottom surface 33b of the sensor housing 31 during attachment, or such misalignment is occasionally caused because of temporal variations after such assembly or attachment. Consequently, the facing surface 56 of the support member 55 is occasionally inclined from the horizontal direction, and the facing surface 56 is occasionally inclined such that the lubricant is led toward the first end portion 110a or the second end portion 110b with the sensor device 24 attached to the gear housing 17. In this case, the lubricant which has dripped onto the facing surface 56 flows from the upper side toward the lower side in the direction of gravitational force in accordance with the inclination to be led toward an end portion of the support member 55. The end portion of the support member 55 to which the lubricant is led is the first end portion 110a or the second end portion 110b which is an end portion on the outer side with respect to the substrate 61. Thus, the lubricant which has dripped can be prevented from reaching the substrate 61, and degradation of the substrate 61 due to the lubricant can be suppressed.
   In addition, the recessed groove 100 is formed at a position farther away from the first pinion shaft 13 than the first driven gear 53 and the second driven gear 54 in a direction that is orthogonal to the imaginary line L. Thus, even if the lubricant which has dripped onto the facing surface 56 flows toward the third end portion 110c, the lubricant flows into the recessed groove 100. Therefore, the lubricant which has dripped onto the facing surface 56 can be prevented from flowing toward the third end portion 110c with respect to the recessed groove 100, and the lubricant can be further prevented from reaching the third end portion 110c and dripping onto the substrate 61.
(2) When the lubricant which has dripped from the first driven gear 53 and the second driven gear 54 onto the facing surface 56 of the support member 55 flows into the recessed groove 100 in accordance with the gravitational force, the lubricant is spread in the recessed groove 100 which is formed in the support member 55 in accordance with the gravitational force. Consequently, the lubricant which has flowed into the recessed groove 100 is moved along the recessed groove 100. Since the recessed groove 100 is formed to extend to the first end portion 110a and the second end portion 110b of the support member 55, the lubricant which has flowed into the recessed groove 100 can be led more adequately to the first end portion 110a and the second end portion 110b to reach the end portions of the recessed groove 100. Since the first end portion 110a and the second end portion 110b are positioned on the outer side with respect to the substrate 61 as seen in the axial direction X, the lubricant which has been led to the first end portion 110a and the second end portion 110b can be further prevented from dripping onto the substrate 61. Consequently, the recessed groove 100 can set the flowing direction of the lubricant on the facing surface 56 to a direction in which the lubricant does not reach the substrate 61, and therefore degradation of the substrate 61 due to the lubricant can be further suppressed.
(3) The sensor device 24 can detect not only the rotational angle θpa of the first pinion shaft 13, but also torque that acts on the first pinion shaft 13 as the steering torque Th.

### Second Embodiment

Next, a sensor device according to a second embodiment will be described with reference to the drawings. Here, differences from the first embodiment will be mainly described.

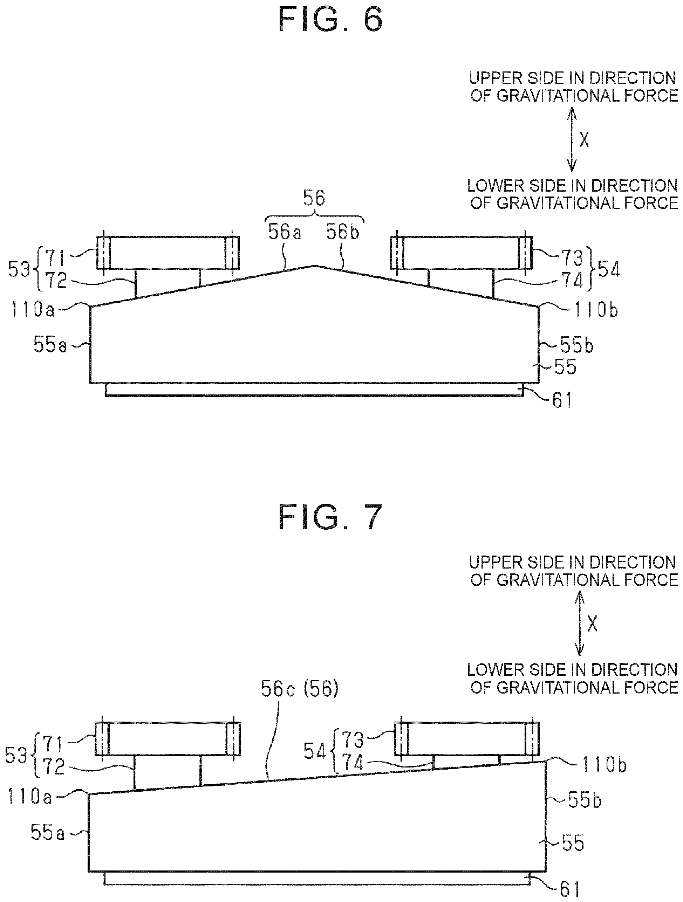

As illustrated in FIG. 6, a first inclined surface 56a and a second inclined surface 56b are formed on the facing surface 56 of the support member 55. The first inclined surface 56a is an inclined surface provided directly below the first driven gear 53. The second inclined surface 56b is an inclined surface provided directly below the second driven gear 54. In the second embodiment, the facing surface 56 is formed in a mountain shape as a whole with the first inclined surface 56a and the second inclined surface 56b. The first inclined surface 56a is inclined from the middle portion between the first driven gear 53 and the second driven gear 54 to the first end portion 110a on the side of the first short side surface 55a on the support member 55. The distance in the axial direction X between the first inclined surface 56a and the substrate 61 becomes shorter toward the first end portion 110a. The second inclined surface 56b is inclined from the middle portion between the first driven gear 53 and the second driven gear 54 to the second end portion 110b on the side of the second short side surface 55b on the support member 55. The distance in the axial direction X between the second inclined surface 56b and the substrate 61 becomes shorter toward the second end portion 110b. That is, the first end portion 110a is the lowest point of the first inclined surface 56a in the direction of gravitational force. In addition, the second end portion 110b is the lowest point of the second inclined surface 56b in the direction of gravitational force. The first end portion 110a and the second end portion 110b are positioned on the outer side with respect to the substrate 61 as seen in the axial direction X.

The functions and the effects of the second embodiment will be described.
(4) The lubricant which has dripped from the first driven gear 53 and the second driven gear 54 onto the facing surface 56 of the support member 55 is moved along the first inclined surface 56a and the second inclined surface 56b in accordance with the gravitational force. Since the first inclined surface 56a is inclined toward the first end portion 110a which is the lowest point of the first inclined surface 56a in the direction of gravitational force, the lubricant which has dripped onto the first inclined surface 56a is led more adequately to the first end portion 110a. Since the second inclined surface 56b is inclined toward the second end portion 110b which is the lowest point of the second inclined surface 56b in the direction of gravitational force, in addition, the lubricant which has dripped onto the second inclined surface 56b is led more adequately to the second end portion 110b. Since the first end portion 110a and the second end portion 110b are positioned on the outer side with respect to the substrate 61 as seen in the axial direction X, the lubricant which has been led to the first end portion 110a and the second end portion 110b can be prevented from dripping onto the substrate 61.

The embodiments may be modified as follows. The following other embodiments can be combined with each other unless such embodiments technically contradict with each other. In addition, the first and second embodiments described above may be combined with each other.

In each of the embodiments, the first support hole 81 and the second support hole 82 may each be a bottomed hole that does not penetrate the support member 55. In each of the embodiments, the first permanent magnet 57 may be attached to an end surface of the first shaft portion 72 on the side of the substrate 61. In addition, the second permanent magnet 58 may be attached to an end surface of the second shaft portion 74 on the side of the substrate 61.

In each of the embodiments, the torsion coil spring 85 is adopted as a biasing member that biases the first driven gear 53 and the second driven gear 54 against the main driving gear 52. However, the present invention is not limited thereto, and a plate spring or a different coil spring may also be adopted as the biasing member. For example, a biasing member that biases the first driven gear 53 against the main driving gear 52 and a biasing member that biases the second driven gear 54 against the main driving gear 52 may be constituted as separate biasing members.

In the second embodiment, as illustrated in FIG. 7, only a third inclined surface 56c may be formed on the facing surface 56 of the support member 55. The third inclined surface 56c is formed over the entire facing surface 56, and inclined from the second end portion 110b toward the first end portion 110a. The distance in the axial direction X between the third inclined surface 56c and the substrate 61 becomes shorter from the second end portion 110b toward the first end portion 110a. That is, the first end portion 110a is the lowest point of the third inclined surface 56c in the direction of gravitational force, and the second end portion 110b is the highest point of the third inclined surface 56c in the direction of gravitational force.

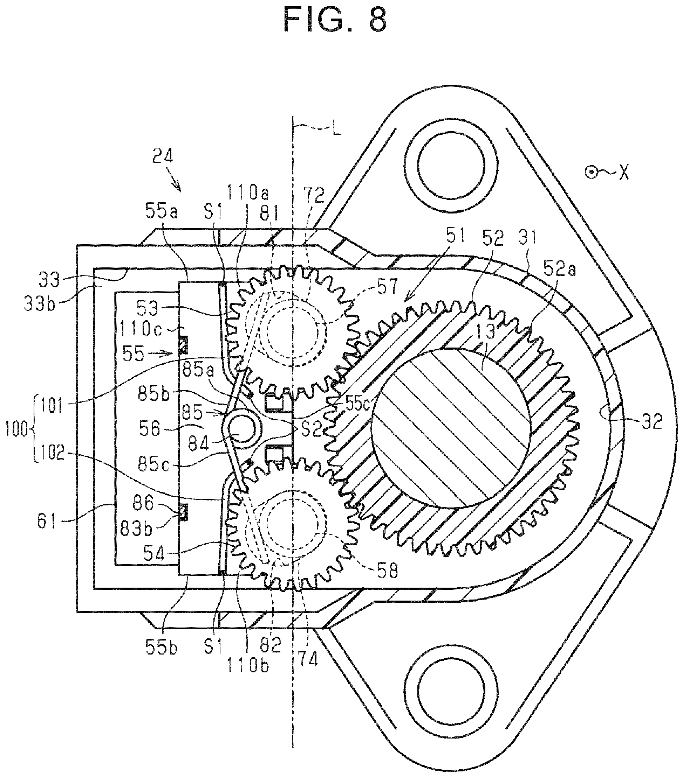

In the first embodiment, as illustrated in FIG. 8, the second portion S2 of the first recessed groove 101 and the second portion S2 of the second recessed groove 102 may not be connected to each other. That is, the first recessed groove 101 and the second recessed groove 102 may be formed as separate recessed grooves.

In the first embodiment, the first portion S1 of the first recessed groove 101 and the first portion S1 of the second recessed groove 102 may be provided at different positions at the same end portion. In this case, the first recessed groove 101 and the second recessed groove 102 serve as a leading portion that leads the lubricant toward the same end portion.

In the first embodiment, the first recessed groove 101 may have at least a portion that extends toward the first end portion 110a without having the second portion S2. In addition, the second recessed groove 102 may have at least a portion that extends toward the second end portion 110b without having the second portion S2.

In the first embodiment, the first recessed groove 101 may have at least a portion that extends toward the first end portion 110a without having the first portion S1. In addition, the second recessed groove 102 may have at least a portion that extends toward the second end portion 110b without having the first portion S1.

In the first embodiment, a groove may be formed in the first short side surface 55a or the second short side surface 55b of the support member 55, in addition to forming the recessed groove 100 which leads the lubricant which has dripped in the facing surface 56 of the support member 55, and the groove and the recessed groove 100 may be connected to each other.

In the first embodiment, the recessed groove 100 which leads the lubricant which has dripped is formed in the support member 55. However, the present invention is not limited thereto. For example, the recessed groove 100 which leads the lubricant which has dripped may be formed in the sensor housing 31 by providing a part of the sensor housing 31 with a function of rotatably supporting the first driven gear 53 and the second driven gear 54. In this case, the sensor housing 31 functions as a support member. In the second embodiment, meanwhile, inclined surfaces that lead the lubricant which has dripped are formed on the support member 55. However, such inclined surfaces may be formed on the sensor housing 31.

In the first embodiment, the recessed groove 100 is adopted as a leading portion that leads the lubricant which has dripped. However, the present invention is not limited to this configuration. For example, a projected wall may be adopted as the leading portion. The lubricant which has dripped onto the support member 55 is led toward an end portion of the support member 55 along the wall.

In each of the embodiments, the manner of providing the lubricant to the main driving gear 52, the first driven gear 53, and the second driven gear 54 is not limited to application, and the lubricant may be provided by dropping droplets of the lubricant or spraying the lubricant, for example.

In each of the embodiments, all the end portions of the facing surface 56 of the support member 55 may be positioned on the outer side with respect to the substrate 61 as seen in the axial direction X. That is, the support member 55 may be provided so as to cover the entire substrate 61 as seen in the axial direction X. In this case, the lubricant may reach any end portion, which increases the degree of freedom in the formation of the recessed groove 100 and the inclined surfaces.

In each of the embodiments, the first rotational angle sensor 62 and the second rotational angle sensor 63 of the rotational angle sensor device 51 are Hall sensors. However, such sensors may be magneto-resistance sensors. In addition, the first torque sensor 46 and the second torque sensor 47 of the torque sensor device 41 are Hall sensors. However, such sensors may be magneto-resistance sensors.

In each of the embodiments, the sensor device may be a rotational angle sensor device 51 obtained by removing a torque sensor device 41 from a sensor device 24. The rotational angle sensor device 51 also has the same issue as torque/angle sensor devices.

In each of the embodiments, the rotational angle sensor device 51 may be configured to have a single driven gear, or may be configured to have three or more driven gears. In each of the embodiments, the sensor device 24 or the rotational angle sensor device discussed above is mounted on a steering device 10 for a vehicle, for example. However, such a device may be applied to other in-vehicle devices that have a rotary shaft. In addition, the sensor device 24 or the rotational angle sensor device is not limited to use for vehicles.

## Claims

1. A sensor device that detects a rotational angle of a rotary shaft as a detection target, the sensor device **characterized by** comprising:
a main driving gear (52) provided so as to be rotate together with the rotary shaft;
a driven gear (53, 54) meshed with the main driving gear (52);
a support member (55) that rotatably supports the driven gear (53, 54); and
a substrate (61) on which a rotational angle sensor (62, 63) that is configured to generate an electric signal based on rotation of the driven gear (53, 54) is mounted, wherein:
a lubricant is applied to teeth of the driven gear (53, 54);
the driven gear (53, 54), the support member (55), and the substrate (61) are stacked in this order from an upper side toward a lower side in a direction of gravitational force with the sensor device attached to an attachment target; and
a part or all of a surface of the support member (55) on a driven gear side is inclined with respect to a direction that is orthogonal to the rotary shaft so as to lead the lubricant to an end portion of the support member (55) on an outer side with respect to the substrate (61).

2. The sensor device according to claim 1, wherein:
the surface of the support member (55) on the driven gear side has a recessed groove (100; 101, 102); and
the recessed groove (100; 101, 102) is provided so as to lead the lubricant to the end portion of the support member (55) on the outer side with respect to the substrate (61).

3. The sensor device according to claim 1 or 2, wherein:
the surface of the support member (55) on the driven gear side is an inclined surface (56a, 56b; 56c) inclined toward the end portion of the support member (55) on the outer side with respect to the substrate (61); and
a distance between the inclined surface (56a, 56b; 56c) and the substrate (61) becomes shorter toward the end portion of the support member (55) on the outer side with respect to the substrate (61).

4. The sensor device according to any one of claims 1 to 3, **characterized by** further comprising a torque sensor (46, 47) configured to detect torque that acts on the rotary shaft.
